(19) **Europäisches Patentamt**

**European Patent Office**

**Office européen des brevets**

(11) **EP 0 472 855 B1**

(12) **EUROPÄISCHE PATENTSCHRIFT**

(45) Veröffentlichungstag und Bekanntmachung des Hinweises auf die Patenterteilung:
**27.03.1996 Patentblatt 1996/13**

(51) Int. Cl.$^6$: **A01C 17/00**

(21) Anmeldenummer: **91110807.4**

(22) Anmeldetag: **29.06.1991**

(54) **Verfahren zur Eichung eines Düngerstreuers**

Calibration method of a fertilizer spreader

Méthode d'étalonnage d'un distributeur d'engrais

(84) Benannte Vertragsstaaten:
**DE FR GB**

(30) Priorität: **25.08.1990 DE 4026879**

(43) Veröffentlichungstag der Anmeldung:
**04.03.1992 Patentblatt 1992/10**

(73) Patentinhaber: **Rauch Landmaschinenfabrik GmbH**
**D-76545 Sinzheim (DE)**

(72) Erfinder: **Rauch, Norbert, Dipl.-Ing.**
**W-7573 Sinzheim (DE)**

(74) Vertreter: **Dipl.-Ing. Heiner Lichti**
**Dipl.-Phys. Dr.rer.nat. Jost Lempert**
**Dipl.-Ing. Hartmut Lasch**
**Postfach 41 07 60**
**D-76207 Karlsruhe (DE)**

(56) Entgegenhaltungen:
| | |
|---|---|
| EP-A- 0 287 165 | EP-A- 0 303 325 |
| DE-A- 3 310 424 | DE-A- 3 325 542 |
| DE-A- 3 641 080 | DE-A- 3 714 642 |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Eichung der Streudichte (Streumenge pro Flächeneinheit) eines fahrbaren Düngerstreuers in Abhängigkeit von der Düngersorte mit einem einstellbaren Dosierorgan, insbesondere einem solchen mit nicht-linearer Abhängigkeit zwischen dessen Stellgröße und der Dosiermenge.

Für die Qualität des Arbeitsergebnisses beim Düngerstreuen, wie auch für die Effektivität (Düngerverbrauch) ist die Einhaltung einer vorgegebenen Streudichte (Streumenge pro Fläche) von größter Bedeutung. Diese muß unabhängig von der Arbeitsbreite des Streuers, dessen Fahrgeschwindigkeit und der Düngersorte gewährleistet sein, wobei ferner die vorgenannten Betriebsdaten im allgemeinen variabel sind.

Aus der DE 33 10 424 ist es bekannt, einen Pneumatik-Düngerstreuer mit stufenlos regelbaren, umlaufenden Dosierorganen vor der Feldarbeit auf die zu streuende Düngersorte zu eichen. Dazu wird eine vorbestimmte Düngermenge in einer Abdrehprobe ausgetragen und die Anzahl der Umdrehungen des Dosierorgans gemessen, woraus sich eine spezifische Streumenge ergibt. Bei diesem Vorgehen wird davon ausgegangen, daß zwischen der Drehzahl der Dosierorgane und der ausgebrachten Düngermenge, d. h. den Massenstrom, ein linearer Zusammenhang besteht. Das Ergebnis wird in einen Rechner eingegeben, in dem ferner die gewünschte Streudichte und die aktuelle Arbeitsbreite gespeichert ist. Durch Aufnahme und Verarbeitung der Fahrgeschwindigkeit wird die Drehzahl des Dosierorgans stets so gesteuert, daß eine gleichbleibende Streudichte erhalten wird.

Dieses Vorgehen läßt sich jedoch nicht ohne weiteres auf solche Streuer übertragen, bei denen die pro Zeiteinheit ausgebrachte Menge in keinem linearen Zusammenhang zur Stellgröße des Dosierorgans steht. Dies gilt vor allem für Schleuderstreuer, bei denen der Dünger durch eine Behälteröffnung unter Schwerkraft ausgetragen und die Streumenge durch verstellbare Dosierschieber eingestellt wird. Hierbei tritt als erstes die Schwierigkeit auf, daß eine spezifische Streumenge, wie im oben genannten Fall, nicht bestimmt werden kann. Die gleiche Problematik stellt sich aber auch, wenn drehbare Dosierorgane zum Einsatz kommen, die keinen linearen Zusammenhang zwischen ihrer Drehzahl und dem Massenstrom liefern, oder aber Abweichungen von der Linearität insbesondere bei großer Variation der Fahrgeschwindigkeit, der Streudichte und/oder der Arbeitsbreite vorliegen.

In beiden Fällen ist es aber gleichwohl notwendig, die streugutspezifischen Eigenschaften des Düngers, die z. B. durch Korngröße, Kornform, Rauhigkeit und spezifisches Gewicht bestimmt sind, sowie aktuelle Änderungen im Rieselverhalten, das durch Feuchtigkeit und Lagerzeit maßgeblich beeinflußt wird, mittels einer Abdrehprobe zu erfassen bzw. zu kontrollieren.

Aus der DE-A 36 41 080, die den gattungsbildenden Stand der Technik darstellt, ist ein Verfahren zur Eichung der Schieberstellung für gewünschte Ausbringmengen von Dünger bekannt, wobei zwischen der Ausbringmenge und der Schieberstellung ein nicht-linearer Zusammenhang besteht. Zur Eichung wird der Schieber auf eine vorbestimmte Öffnungsstellung verfahren und es wird in einer Abdrehprobe die über eine bestimmte Wegstrecke bzw. in einem bestimmten Zeitabschnitt aus der Öffnung des Schiebers austretende Düngermenge aufgefangen. Die aufgefangene Düngermenge wird gewogen und anschließend über eine Tastatur einem Rechner eingegeben. In dem Rechner ist die Ausbringmenge in Abhängigkeit von der Schieberstellung für verschiedene Düngerarten gespeichert. Auch die Schieberstellung ist im Rechner erfaßt. Aufgrund der vorgegebenen oder ermittelten Werte kann der Rechner den Soll-Wert und den Ist-Wert für die Ausbringmenge ermitteln, so daß trotz der nicht-linearen Beziehung die Ausbringmenge in für den Benutzer einfacher Weise eingestellt werden kann.

In der Praxis hat sich jedoch gezeigt, daß die Betriebsparameter, d.h. die Fahrgeschwindigkeit v, die Arbeitsbreite A und die Streudichte D während des Streuvorganges nicht auf einem konstanten Wert gehalten werden können, sondern natürlichen oder geländebedingten Schwankungen unterliegen. Diese Schwankungen können bei dem Verfahren gemäß der DE-A-36 41 080 nicht berücksichtigt werden.

Der Erfindung liegt die Aufgabe zugrunde, ein Verfahren der genannten Art zu schaffen, das eine Anpassung der Abdrehprobe an einen bei Betrieb zu erwartenden Betriebsbereich ermöglicht.

Diese Aufgabe wird durch das Verfahren gemäß Patentanspruch 1 gelöst. Gemäß diesem Verfahren werden Kenndaten oder Kurven, die zumindest einen mittleren sowie zwei extreme oder düngerspezifische funktionelle Zusammenhänge zwischen dem Massenstrom und der Stellgröße des Dosierorgans repräsentieren, in einem Rechner gespeichert. Vor einer Abdrehprobe werden ein Wert v für eine bevorzugte Fahrgeschwindigkeit oder Grenzwerte $v_{min}$ und $v_{max}$ für einen bevorzugten Fahrgeschwindigkeitsbereich und/oder ein Wert D für eine bevorzugte Streudichte oder Grenzwerte $D_{min}$ und $D_{max}$ für einen bevorzugten Streubereich und/oder ein Wert A für eine bevorzugte Arbeitsbreite oder Grenzwerte $A_{min}$ und $A_{max}$ für einen bevorzugten Arbeitsbreitenbereich als Betriebsdaten eingegeben und gespeichert. Dabei geben die Grenzwerte lediglich die beim Einsatz des Düngerstreuers wahrscheinlichen Bereiche für die Fahrgeschwindigkeit, die Streudichte und die Arbeitsbreite an, ohne daß sich der Landwirt bei der Feldarbeit auf diese beschränken muß. Hiermit wird vornehmlich eine bessere Anpassung der Abdrehprobe auf den späteren Betriebsbereich ermöglicht, wobei aufgrund von Art und topographischen Gegebenheiten des Bodens notwendige Variationen berücksichtigt werden können. Dabei ist es auch denkbar, daß z.B. mehrere Streudichten D gespeichert werden und der Rechner aus diesen das Minimum und Maximum als Grenzwerte bestimmt.

Durch die Eingabe der Betriebsdaten vor der Kalibrierung ist es möglich, eine optimale Einstellung für die Abdrehprobe zu bestimmen. Vorzugsweise werden die Kenndaten werkseitig vorgegeben und/oder gespeichert, so daß der Landwirt lediglich vor der Kalibrierung die zu erwartenden Betriebsdaten einzugeben hat. Durch die Speicherung vorrichtungs- und/oder düngerspezifischer Kenndaten ist es möglich, auch nichtlineare Zusammenhänge zwischen der Stellgröße des Dosierorgans und dem Massenstrom zu kompensieren, was gerade im Hinblick auf die Einstellung/Steuerung von Massenströmen in weiten Bereichen wichtig ist, um trotzdem eine möglichst gleichmäßige Streudichte zu erreichen. Es ist insbesondere mit diesem Verfahren möglich, auch nicht-drehende, insbesondere blendenartig arbeitende Dosierorgane ohne Verwendung einer Streutabelle zu kalibrieren. Das Verfahren kompensiert auch Abweichungen von linear funktionellen Zusammenhängen und gewährleistet dadurch eine genauere Einhaltung der Streudichte.

Für mindestens einen Parameter wird ein Bereich mittels der Grenzwerte festgelegt. Auf der Grundlage der Werte und Grenzwerte wird ein minimaler und ein maximaler Massenstrom $\dot{m}_{max}$ bzw. $\dot{m}_{min}$ mit Hilfe der Formel $\dot{m} = D \times v \times A$ sowie deren algebraisches Mittel bestimmt. Damit wird das Intervall festgelegt, in dem sich der Massenstrom wahrscheinlich beim Betrieb bewegen wird. Bei Überschreitung einer der Intervallgrenzen kann eine Warnung für den Landwirt abgegeben werden.

Es kann vorgesehen sein, daß mittels dem algebraischen Mittel des minimalen und maximalen Massenstromes als mittlerer Massenstrom und gespeicherten Kenndaten, die den funktionellen Zusammenhang zwischen dem Massenstrom und der Einstellung des Dosierorgans für eine durchschnittliche Düngersorte darstellen, das Dosierorgan für die Abdrehprobe eingestellt wird. Dadurch wird erreicht, daß auch bei einem in sehr weiten Bereichen veränderlichen Massenstrom eine Einstellung für die Abdrehprobe gewählt wird, die mit großer Wahrscheinlichkeit innerhalb des wahrscheinlich benötigten Massenstromintervalls liegt.

Für eine erste Abdrehprobe wird für das Dosierorgan aus dem minimalen oder dem maximalen Massenstrom und den Kenndaten oder der Kurve, die den mittleren funktionellen Zusammenhang zwischen dem Massenstrom und der Stellgröße des Dosierorgans für eine durchschnittliche Düngersorte repräsentiert, eine erste Einstellung A ermittelt. Das Dosierorgan wird dann entsprechend eingestellt. In der ersten Abdrehprobe wird eine gewisse Menge des Düngers bei der ermittelten Einstellung A des Dosierorgans ausgebracht und aufgefangen, wobei der tatsächliche Massenstrom $\dot{m}$ aus der Ausbringzeit t und dem Wiegewert m des ausgebrachten Düngers nach $\dot{m} = m/t$ bestimmt wird.

Eine deutliche Verbesserung der Genauigkeit der Kalibrierung wird dadurch erreicht, daß nach der Bestimmung des tatsächlichen Massenstromes der ersten Abdrehprobe eine zweite Aodrehprobe durchgeführt wird. Für die zweite Abdrehprobe wird für das Dosierorgan eine zweite Einstellung $B_i$ ermittelt. Wenn die erste Einstellung A mit dem minimalen Massenstrom ermittelt wurde, ergibt sich die zweite Einstellung $B_i$ aus dem maximalen Massenstrom und der dem tatsächlichen Massenstrom der ersten Aodrehprobe am nächsten liegenden Kurve, falls der tatsächliche Massenstrom kleiner als der mittlere Massenstrom ist. Im anderen Fall ergibt sich die zweite Einstellung $B_i$ aus dem minimalen Massenstrom und der am nächsten liegenden Kurve.

Wenn die erste Einstellung A mit dem maximalen Massenstrom ermittelt wurde, ergibt sich die zweite Einstellung $B_i$ aus dem minimalen Massenstrom und der dem tatsächlichen Massenstrom der ersten Abdrehprobe am nächsten liegenden Kurve, falls der tatsächliche Massenstrom größer als der mittlere Massenstrom ist. Im anderen Fall ergibt sich die zweite Einstellung $B_i$ aus dem maximalen Massenstrom und der am nächsten liegenden Kurve.

Das Dosierorgan wird für die zweite Abdrehprobe auf die zweite Einstellung $B_i$ eingestellt, woraufhin die zweite Abdrehprobe durchgeführt und der tatsächliche Massenstrom für die zweite Abdrehprobe ermittelt wird.

Bei diesem Vorgehen ist im allgemeinen eine gute Eichung zu erwarten, da meistens beide Abdrehpunkte, d.h. die beiden tatsächlichen Massenströme im Intervall zwischen dem minimalen und maximalen Massenstrom liegen, und so eine gute Approximation des funktionellen Zusammenhangs zwischen Massenstrom und Stellgröße der Dosiervorrichtung erfolgen kann. Dabei ist vorgesehen, daß die beiden Einstellungen des Dosierorgans für die beiden Abdrehproben so weit differieren, daß eine vernünftige Interpolation und in gewissen Grenzen eine Extrapolation auf andere Einstellungen, insbesondere in dem bevorzugten Massenstromintervall, möglich ist.

Mit Hilfe der beiden Werte für den tatsächlichen Massenstrom beider Abdrehproben und/oder deren Abweichung vom jeweils eingestellten Wert werden die Kenndaten bzw. Kurven angepaßt oder korrigiert. Die angepaßten Kenndaten oder Kurven oder Korrekturfaktoren werden als Betriebssteuerdaten für das Dosierorgan für den Betrieb des Düngerstreuers abgespeichert. Hiermit läßt sich für Düngerstreuer eine sehr brauchbare Approximation des funktionellen Zusammenhangs zwischen dem tatsächlichen Massenstrom und der Stellgröße für die jeweilige Düngersorte erzielen.

Zur weiteren Verbesserung des Verfahrens ist vorgesehen, daß die Kenndaten mehrerer Düngersorten gespeichert werden und nach Selektion das Dosierorgan für die erste Abdrehprobe eingestellt wird. Dadurch ist es möglich, auch bei so unterschiedlichen Düngern, wie Kieserit und 50er-Kali, deren Massenstrom bei herkömmlichen Blendenöffnungen etwa um den Faktor 2 differiert, eine deutlich bessere Anpassung zu erreichen, so daß der tatsächliche Massenstrom näher am theoretisch eingestellten liegt. Hierbei kann z.B. vorgesehen sein, daß dem Rechner werkseitig oder auch austauschbar Kenndaten für eine Vielzahl verschiedener Düngersorten und deren funktionellem Zusammenhang zwischen Massenstrom und Stellgröße des Dosierorgans eingespeichert ist. Diese Kenndaten können aus Parametern, Korrekturfaktoren oder Wertetabellen bestehen. Über eine Dateneingabe kann dann eine Zuordnung zwischen einem Kenndatensatz und der entsprechenden, gerade verwendeten Düngersorte erfolgen.

Als einfache Möglichkeit, die eine gute Approximation liefert, ist vorgesehen, daß als Betriebssteuerdaten eine Kurve dritten Grades mit der Nebenbedingung, daß die Kurve durch den Nullpunkt mit der Steigung Null geht, festgelegt wird.

Ein bevorzugter Verfahrensgang ergibt sich dadurch, daß als Kenndaten eine flache, mittlere und steile Kurve, die eine mittlere und zwei extreme Funktionen für die Abhängigkeit des Massenstromes von der Einstellung des Dosierorgans repräsentieren, gespeichert werden.

Bei einem abgewandelten Verfahren wird so vorgegangen, daß zunächst in oben genannter Weise die Kenndaten oder Kurven bezüglich dem Zusammenhang zwischen dem Massenstrom und der Stellgröße des Dosierorgans sowie die Werte bzw. Bereiche für die Fahrzeuggeschwindigkeit v, die Streudichte D und die Arbeitsbreite A als Betriebsdaten in dem Rechner gespeichert werden, woraufhin aus den Werten und Grenzwerten in genannter Weise ein minimaler und maximaler Massenstrom sowie deren algebraisches Mittel bestimmt werden.

Für eine erste Abdrehprobe für das Dosierorgan wird aus dem mittleren Massenstrom und den Kenndaten oder der Kurve, die den mittleren funktionellen Zusammenhang zwischen dem Massenstrom und der Stellgröße des Dosierorgans für eine durchschnittliche Düngersorte repräsentiert, eine erste Einstellung A ermittelt, woraufhin das Dosierorgan entsprechend eingestellt wird.

In der ersten Abdrehprobe wird eine gewisse Menge Dünger bei der ermittelten Einstellung A des Dosierorgans ausgebracht und aufgefangen, wobei der tatsächliche Massenstrom ṁ aus der Ausbringzeit t und dem Wiegewert m des ausgebrachten Düngers nach ṁ = m/t bestimmt wird. In Abhängigkeit von der Abweichung des tatsächlichen Massenstroms wird die Kurve korrigiert, wobei für das Dosierorgan für eine zweite Abdrehprobe eine zweite Einstellung B ermittelt wird. Die zweite Einstellung B ergibt sich aus dem minimalen Massenstrom und der korrigierten Kurve, falls der tatsächliche Massenstrom der ersten Abdrehprobe größer als der mittlere Massenstrom ist. Im anderen Fall ergibt sich die zweite Einstellung B aus dem maximalen Massenstrom und der korrigierten Kurve. Daraufhin wird das Dosierorgan für die zweite Aodrehprobe auf die zweite Einstellung B eingestellt und die zweite Abdrehprobe durchgeführt, so daß der tatsächliche Massenstrom für die zweite Abdrehprobe ermittelt werden kann. Mittels der beiden Werte für den tatsächlichen Massenstrom beider Aodrehproben und/oder deren Abweichung vom jeweils eingestellten Wert werden die Kenndaten bzw.

Kurven angepaßt oder korrigiert. Die angepaßten Kenndaten oder Kurven oder Korrekturfaktoren werden als Betriebssteuerdaten für das Dosierorgan für den Betrieb des Düngerstreuers abgespeichert.

Eine Korrektur der zur ersten Abdrehprobe verwendeten Kurve kann beispielsweise durch einen aus der Abweichung des tatsächlichen vom eingestellten Massenstrom bestimmten Proportionalitätsfaktor erfolgen. Genauso kann die Kurve als eine einparametrische Kurvenschar gegeben sein, die entsprechend angepaßt wird. Nach Auswertung der zweiten Abdrehprobe kann z. B. die Kurve durch einen zweiten Parameter oder durch Minimierung der Fehlerquadratsumme angepaßt werden oder eine Kurve dritten Grades, wie oben erläutert, festgelegt werden. Somit kann eine gute Approximation der Einstellung der Dosiervorrichtung im bevorzugten Massenstromintervall erwartet werden.

Wiederum können Kenndaten für verschiedene Dünger verwendet werden und die Kurven in Form von einzelnen gespeicherten Wertetabellen oder aber als Parameter zur Kurvenfestlegung, die sich wahlweise auch noch auf eine gespeicherte Basiskurve beziehen, vorliegen.

Es kann vorgesehen sein, daß bei der Abdrehprobe eine vorgegebene Menge aufgefangen und die hierfür benötigte Ausbringzeit gespeichert wird. Beim Abdrehen wird die auslaufende Menge an Dünger gewogen und das Aodrehen entsprechend einer Vorgabemenge beendet oder die ausgebrachte Menge abgespeichert, so daß sich eine sehr einfache Bedienung für den Landwirt ergibt.

Eine Vorrichtung zur Eichung eines Düngerstreuers mit wenigstens einem einstellbaren Dosierorgan zur Durchführung der vorgenannten Verfahren weist die folgende Merkmale auf: eine Eingabetastatur zur Eingabe von Betriebsdaten, wie Arbeitsbreite, gewünschte Streudichte, bevorzugter Fahrgeschwindigkeitsbereich, Ergebnissen von Aodrehproben und gegebenenfalls weiterer Daten, eine Speichereinheit für die vorgenannten Daten, eine Zeitmeßeinrichtung zur Bestimmung der Ausbringzeit bei Abdrehproben, einen Prozessor zur Verarbeitung der Daten und Bestimmung der Einstellung(en) des Dosierorgans für die Abdrehprobe(n), zur Bestimmung der Betriebssteuerdaten und zur Steuerung des Dosierorgans bei Betrieb des Düngerstreuers und eine Anzeigeeinheit zur Führung des Eingabeablaufs, Korrektur, Speicheranzeige und Überwachung. Mit der Eingabe weiterer Daten kann beispielsweise die Eingabe von Kenndaten oder die Auswahl einer bestimmten Dünger sorte erfolgen. Mit dieser Vorrichtung läßt sich eine bedienfreundliche, schnelle und präzise Kalibrierung eines Düngerstreuers vornehmen.

Vorzugsweise ist ein Düngerstreuer mit der vorgenannten Vorrichtung versehen und so ausgebildet, daß eine fahrgeschwindigkeitsabhängige Steuerung des Dosierorgans zur Konstanthaltung der Streudichte durch Variation des Massenstroms, die insbesondere für Abdrehproben bei stehendem Schlepper abschaltbar ist, vorgesehen ist. Die fahrgeschwindigkeitsabhängige Steuerung erlaubt eine Anpassung der Geschwindigkeit an das jeweilige Gelände unter Konstanthaltung der Streudichte. Dadurch wird der Massenstrom bei stehendem Schlepper auf Null geregelt. Um Abdrehproben jedoch auch bei stehendem Schlepper vornehmen zu können, ist es vorteilhaft, wenn diese Steuerung dabei abschaltbar ist.

Eine bevorzugte Ausführung ergibt sich dadurch, daß als Dosierorgan ein Dosierschieber von einem elektrisch gesteuerten Linearmotor angetrieben und ferner ein davon unabhängiger, hydraulisch betätigter Absperrschieber vorgesehen ist. Im allgemeinen ist die Bewegung des Dosierschiebers träge, so daß zu einem schnellen An- und Abschalten des Massenstromes der Absperrschieber verwendet wird. Damit läßt sich insbesondere eine präzise Steuerung des Massenstromes bei Durchführung der Abdrehproben realisieren.

Zur weiteren Vereinfachung der Abdrehproben kann vorgesehen sein, daß eine Waage mit Endlagensteuerung und/oder Meßwertaufnehmer zur automatischen Bestimmung der ausgebrachten Düngermenge bei einer Abdrehprobe vorgesehen ist.

Nachfolgend wird die Erfindung anhand der Zeichnung näher erläutert. Es zeigen:

Figur 1      ein Ablaufdiagramm des Verfahrens;

Figur 2      ein Diagramm zur Abhängigkeit des Massenstromes ṁ von der Einstellung des Dosierorgans in SKT (Skalenteilen) mit drei verschiedenen Düngersorten;

Figur 3      ein weiteres Diagramm analog dem der Figur 2;

Figur 4      eine Ansicht eines Bedienungstableaus;

Figur 5      einen Schleuderstreuer und

Figur 6      ein Blockschaltbild mit Meßwerterfassungs- und Steuerungselementen.

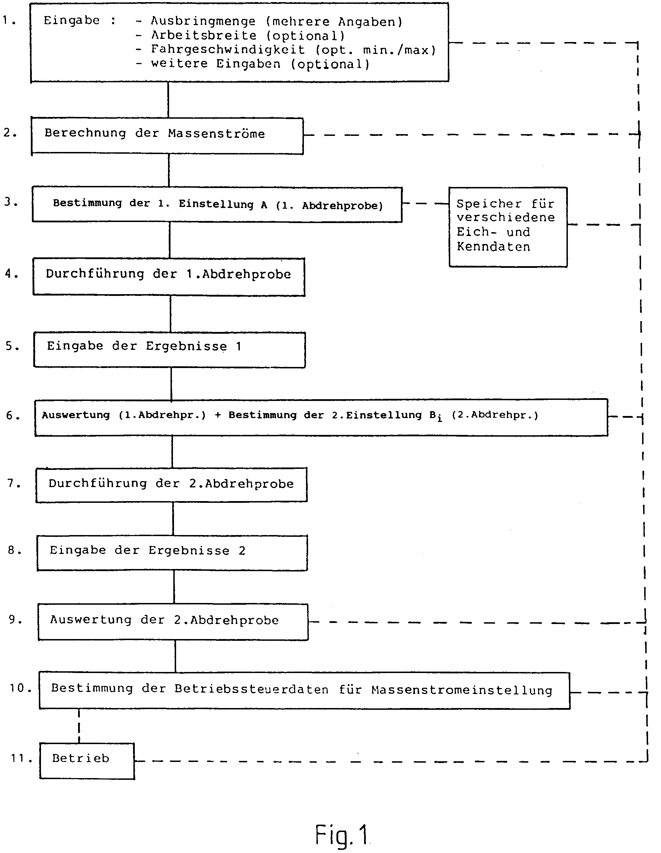

In Figur 1 ist ein Ablaufdiagramm für die bevorzugte Ausführung des Verfahrens dargestellt. Nachdem der Düngerstreuer am Schlepper angehängt oder angekuppelt und die entsprechenden Versorgungskabel und mechanischen Verbindungen hergestellt sind, kann der Düngerstreuer wie folgt kalibriert werden:

1. Es werden zunächst die gewünschten Betriebsdaten für die vorgesehene Feldarbeit eingegeben und gespeichert, nämlich beispielsweise die Arbeitsbreite A [m] oder ein Arbeitsbreitenintervall, eine oder mehrere gewünschte Ausbringmengen (Streudichten) D [kg/ha] oder ein Streudichtenintervall, eine bestimmte Fahrgeschwindigkeit v [km/h] oder ein Fahrgeschwindigkeitsintervall sowie eventuell weitere Angaben, z. B. über die verwendete Düngersorte. Die Daten werden in einem Speicher abgelegt.

2. Es erfolgt dann die Berechnung des mittleren und/oder des minimalen und maximalen Massenstromes, d.h. es wird das Intervall bestimmt, innerhalb dessen sich der Massenstrom aufgrund der eingegebenen Betriebsdaten beim Einsatz wahrscheinlich bewegen wird. Dabei werden die benötigten Daten aus dem Speicher verwendet und die Ergebnisse abgespeichert.

3. Aufgrund des bestimmten Massenstromintervalls wird eine erste Einstellung A der Dosierorgane für die erste Abdrehprobe bestimmt. Dabei werden Kenndaten, die schon vorher, vorzugsweise werkseitig, eingespeichert worden sind, herangezogen. So ist z. B. der funktionelle Zusammenhang zwischen dem Massenstrom und der Stellgröße des Dosierorgans in parametrischer Form für einen bestimmten oder für mehrere repräsentative Dünger gespeichert. Damit ist es möglich, einen optimalen Arbeitspunkt für die erste Abdrehprobe zu bestimmen. Das Dosierorgan wird angesteuert und auf den Arbeitspunkt gefahren.

4. Es erfolgt die Durchführung der ersten Abdrehprobe. Dazu wird eine gewisse Zeit Dünger in dieser Einstellung des Dosierorgans ausgetragen. Die Aodrehprobe wird vorzugsweise bei stehendem Schlepper durchgeführt.

5. Die Zeit wird gemessen und die Masse des ausgebrachten Düngers bestimmt. Vorzugsweise braucht nur die Masse der ausgebrachten Menge eingegeben zu werden, während die Zeit automatisch aufgenommen und gespeichert wird. Die Ergebnisse werden in einem Speicher abgelegt.

6. Das Ergebnis der ersten Abdrehprobe wird ausgewertet, d. h. es wird der tatsächliche Massenstrom bestimmt. In Abhängigkeit vom Ergebnis der ersten Abdrehprobe wird eine zweite Einstellung $B_i$ für eine zweite Abdrehprobe bestimmt. Dabei wird wiederum auf die Kenndaten im Speicher zurückgegriffen, wobei z. B. nun ein besser angepaßter funktioneller Zusammenhang für die Einstellung des Dosierorgans verwendet werden kann.

7. Es erfolgt die Durchführung der zweiten Abdrehprobe analog zur ersten.

8. Wiederum werden die Ergebnisse eingegeben und im Speicher abgelegt.

9. Es erfolgt die Auswertung der zweiten Abdrehprobe, wobei ein zweiter Massenstrom bestimmt und abgespeichert wird.

10. In Abhängigkeit der beiden tatsächlichen Massenströme aus den zwei Abdrehproben wird ein funktioneller Zusammenhang zwischen dem Massenstrom und der Einstellung des Dosierorgans als Betriebssteuerdaten festgelegt, wobei gegebenenfalls wiederum gespeicherte Kenndaten verwendet werden.

11. Es besteht die Möglichkeit nun zum Betrieb überzugehen. Beim Einsatz des Düngerstreuers werden die Betriebssteuerdaten verwendet. Somit ist es möglich, für eine bestimmte Düngersorte auch bei nicht-linear arbeitenden Dosierorganen eine fahrgeschwindigkeitsabhängige und damit mengenveränderliche Steuerung während des Einsatzes zu gestatten, um damit die Einhaltung einer gewünschten Streudichte auf der gesamten bestreuten Fläche zu gewährleisten. Beim Einschalten im Modus "Betrieb" wird direkt auf die zuletzt bestimmten Betriebssteuerdaten im Speicher zugegriffen.

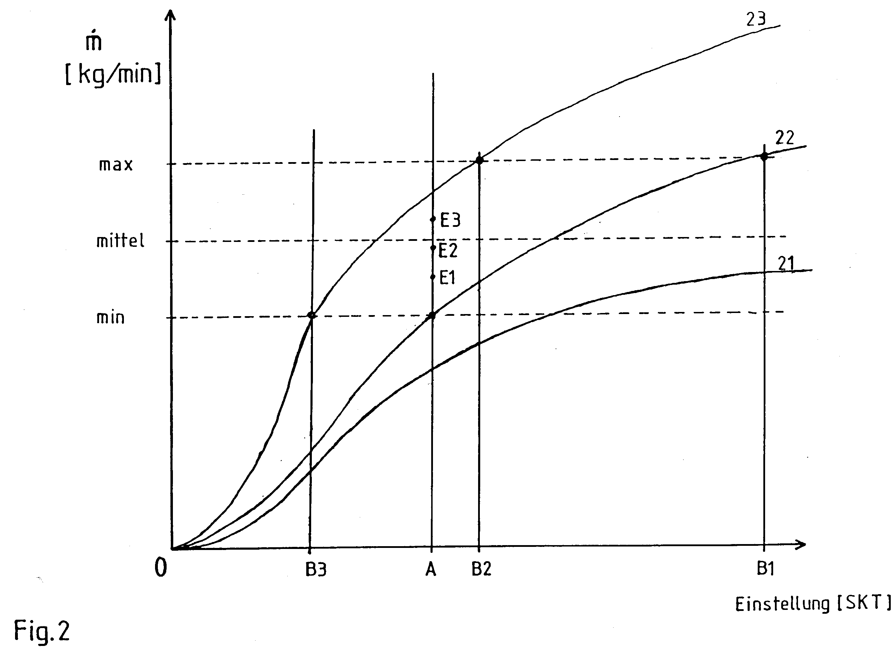

Das Diagramm gemäß Figur 2 zeigt ein Vorgehen zur Bestimmung der Abdrehprobenpunkte, d. h. für die Einstellung des Dosierorgans. Dabei werden durch die Kurven 21, 22 und 23 vorgegebene Kenndaten für drei repräsentative Düngersorten verwendet. Kurve 21 repräsentiert den funktionellen Zusammenhang von Massenstrom $\dot{m}$ und Stellung des Dosierorgans in SKT (Skalenteile) mit einem relativ flachen Verlauf. Die mittlere Kurve 22 repräsentiert einen durchschnittlichen Dünger und die steile Kurve 23 einen, der sich beispielsweise für einen gut rieselfähigen, kleinkörnigen Dünger ergibt.

Die erste Einstellung A in SKT für das Dosierorgan für die erste Abdrehprobe wird aus dem minimalen Massenstrom, der aus den Betriebsdaten bestimmt wurde, und der mittleren Kurve 22 bestimmt. Nach Durchführung und Auswertung der ersten Abdrehprobe sind in Figur 2 drei mögliche Ergebnisse E1, E2 und E3 dargestellt. Ziel des Verfahrens ist es, die tatsächlichen Massenströme der zwei Abdrehproben möglichst in die Nähe des minimalen und maximalen Massenstromes zu legen, so daß eine gute Interpolation für Zwischenwerte erfolgen kann.

Wird bei der Abdrehprobe das Ergebnis E1 erzielt, so liegt dieses unterhalb des mittleren Massenstromes, also näher dem minimalen und im übrigen näher der mittleren Kurve 22 als der steilen Kurve 23. Deshalb wird für die zweite Abdrehprobe eine zweite Einstellung B1 auf der mittleren Kurve 22, jedoch bei maximalem Massenstrom bestimmt.

Liegt hingegen der tatsächliche Massenstrom näher an der steilen Kurve 23 als an der mittleren Kurve 22, gleichwohl aber unterhalb des mittleren Massenstromes, wie dies im Diagramm durch ein Ergebnis E2 repräsentiert ist, so erfolgt die Bestimmung der zweiten Einstellung B2 für die zweite Abdrehprobe aus steiler Kurve 23 und dem maximalen Massenstrom.

Liegt dagegen der tatsächliche Massenstrom, wie bei dem Ergebnis E3, über dem mittleren Massenstrom, so wird die zweite Einstellung B3 für die zweite Abdrehprobe aus der steilen Kurve 23 und dem minimalen Massenstrom bestimmt.

Wenn sich kein Schnittpunkt eines bestimmten Massenstromes mit einer Kurve ergibt, wird die größte Einstellung des Dosierorgans gewählt.

Mit diesem Vorgehen wird erreicht, daß die tatsächlichen Massenströme der ersten und zweiten Abdrehprobe möglichst im Intervall des minimalen/maximalen Massenstromes liegen. Natürlich kann bei diesem Verfahren auch mit einer Einstellung gebildet aus der mittleren Kurve 22 und dem maximalen Massenstrom begonnen werden und alle nachfolgenden Schritte entsprechend alterniert werden. Dabei ergibt sich jedoch kein prinzipieller Unterschied zu dem erstgenannten Vorgehen.

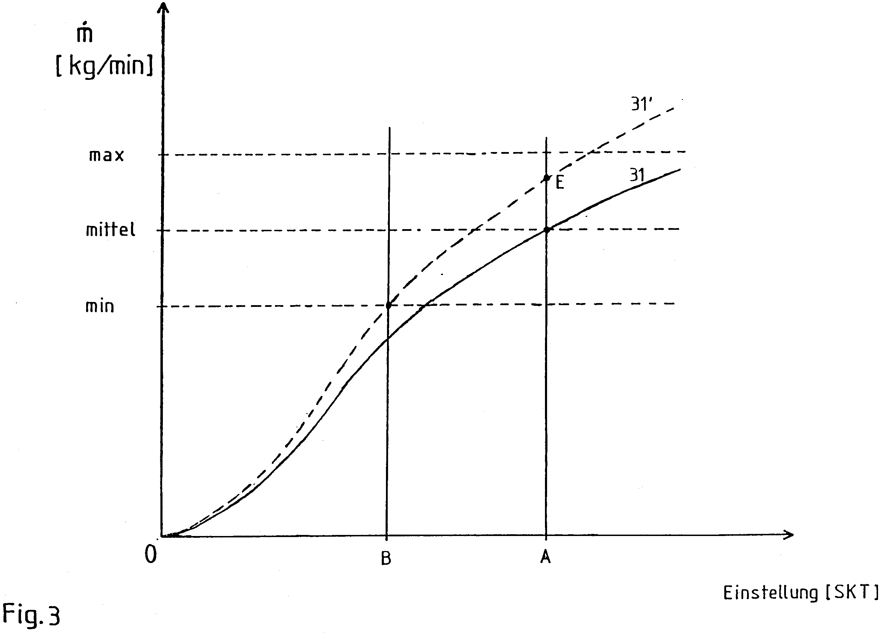

Figur 3 zeigt wiederum ein Diagramm mit dem Massenstrom über der Stellgröße (SKT) des Dosierorgans. Anhand dieses Diagramms wird eine andere Möglichkeit zur Bestimmung der Einstellungen für zwei Abdrehproben erläutert. In diesem Fall werden die Kenndaten eines durchschnittlichen Düngers durch eine Kurve 31 repräsentiert und der mittlere Massenstrom zur Bestimmung einer ersten Einstellung A für die erste Abdrehprobe verwendet. Der sich nach Durchführung und Auswertung der ersten Abdrehprobe ergebende tatsächliche Massenstrom ist in Figur 3 als Ergebnis E dargestellt. Es erfolgt eine Korrektur der Kurve 31 zu einer Kurve 31', auf der der tatsächliche Massenstrom liegt. Die Korrektur der Kurve 31 kann z. B. dadurch erfolgen, daß einfach eine Anpassung mittels eines Proportionalitätsfaktors erfolgt. Des weiteren wird in Abhängigkeit davon, ob der tatsächliche Massenstrom über oder unter dem mittleren Massenstrom liegt entweder der minimale oder maximale Massenstrom und die korrigierte Kurve 31' zur Bestimmung einer zweite Einstellung B für die zweite Abdrehprobe verwendet. Es ist zu erwarten, daß der sich ergebende zweite tatsächliche Massenstrom im Bereich einer Intervallgrenze des bevorzugten Massenstromintervalls liegt, so daß mit beiden tatsächlichen Massenströmen eine gute Approximation erfolgen kann.

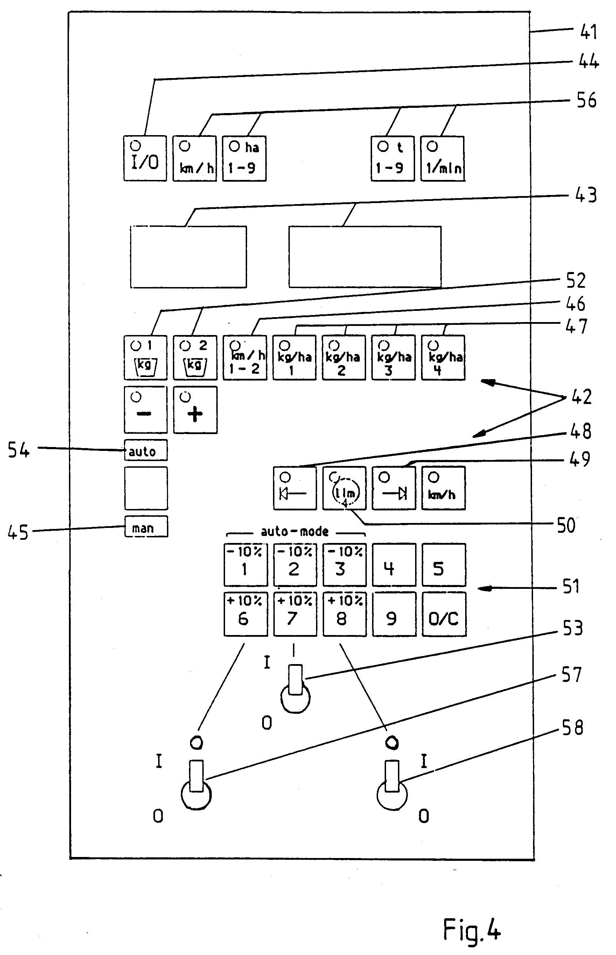

Figur 4 zeigt ein Eingabetableau 41 einer Vorrichtung zur Durchführung des erfindungsgemäßen Verfahrens, die zur Kalibrierung und Steuerung eines Zweischeibenschleuderstreuers ausgelegt ist. Die Vorrichtung weist im Eingabetableau 41 eine Tastatur 42 und Anzeigeeinheiten 43 auf. Nach Einschalten eines Hauptschalters 44 ist das beispielsweise an die Stromversorgung eines Schleppers angeschlossene Gerät funktionsfähig. Mittels einer Umschalttaste 45 kann die Betriebsart "manuell" zur Kalibrierung der Dosierorgane aktiviert werden. Es erfolgt dann die Eingabe der Betriebsdaten, wie Fahrgeschwindigkeitsintervall über eine Taste 46, verschiedene Streudichten (Streumengen in kg/ha) über mehrere Tasten 47 (in dieser Ausführung vier Streudichten) sowie die Arbeitsbreite über eine Taste 48 und 49 jeweils getrennt für jede Schleuderscheibe. Dabei können auf beiden Seiten verschiedene Arbeitsbreiten eingestellt werden. Dies gilt insbesondere für das Streuen im Grenzbereich des Feldes, wenn die zur Feldgrenze liegende Restbreite kleiner ist als die Arbeitsbreite an der dem Feld zugekehrten Seite. Entsprechend der Einstellung der beiden Arbeitsbreiten werden diese dann im Betrieb entsprechend geregelt. An dieser Stelle sei angemerkt, daß die Abdrehprobe stets an der Seite der größeren Arbeitsbreite durchgeführt wird, wenn verschiedene Arbeitsbreiten eingestellt werden. Desweiteren können Grenzdrehzahlen für die Schleuderscheiben über eine Taste 50 eingegeben werden.

Durch die vorgenannten Funktionstasten 46 bis 50 wird die jeweilige Funktion aufgerufen und die Eingabe kann dann mit Hilfe von Zahlentasten 51 erfolgen. In der Anzeigeeinheit 43 kann die jeweilige Eingabe überwacht werden.

Die Vorrichtung verarbeitet die eingegebenen und gespeicherten Daten und mit Hilfe gespeicherter Kenndaten erfolgt die Bestimmung einer Einstellung für die erste Abdrehprobe. Die Durchführung der Abdrehproben wird durch eine Taste 52 aktiviert, die erste Einstellung des Dosierorgans eingestellt und durch Betätigung eines Hauptbreitenschalters 53 wird die Abdrehprobe gestartet und gestoppt.

Dabei mißt die Vorrichtung direkt die Auslaufzeit und es ist lediglich die Menge des ausgebrachten Düngers (hier in kg) mittels der Tasten 51 einzugeben und durch nochmalige Betätigung der Taste 52 zu bestätigen. Entsprechendes gilt für die anschließende zweite Abdrehprobe, die über die zweite Taste 52 aktiviert wird.

Abschließend kann nach erfolgter Kalibrierung über eine Taste 54 der Betriebszustand "auto" eingeschaltet werden. Damit ist die Vorrichtung für den Feldbetrieb einsatzbereit. Mit Hilfe von Tasten 56 können aktuelle Daten wie Fahrgeschwindigkeit, bestreute Fläche, benötigte Zeit und Drehzahl der Schleuderscheiben in den Anzeigeeinheiten 43 abgerufen werden. Des weiteren können die Schleuderscheiben, z. B. für das Grenzstreuen, getrennt über Schalter 57 und 58 an- und abgeschaltet werden. Aufgrund von Doppelbelegungen ist es mit Hilfe der Tasten 51 möglich, die Streudichte für die Streuscheiben getrennt oder auch gemeinsam in Schritten von 10 % bezüglich des Ausgangswertes zu erhöhen oder zu erniedrigen.

Damit bei Stromausfall oder einem Abschalten des Schleppers, d. h. Auftrennen der Stromhauptversorgung, die durch eine Kalibrierung bestimmten Daten nicht verlorengehen können, werden diese entweder in eine gegen Stromausfall resistente Speichereinheit abgelegt oder es ist eine Notstromversorgung für den Speicher vorgesehen.

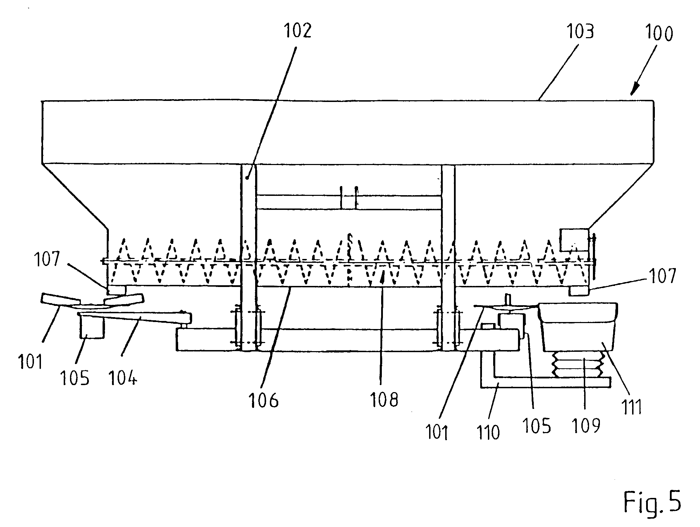

In Figur 5 ist ein Schleuderstreuer 100 mit zwei Wurfscheiben 101 dargestellt. Der Streuer 100 wird mit Hilfe eines Tragrahmens 102 in üblicher Weise an einen Schlepper angebaut. Der Tragrahmen 102 hält einen Vorratsbehälter 103 zur Aufnahme von Dünger sowie im unteren Bereich Schwenkarme 104 mit Hydromotoren 105 zum Antrieb der Wurfscheiben 101. Im Bodenbereich 106 des Vorratsbehälters 103 sind Auslauföffnungen 107 jeweils im Bereich einer Wurfscheibe 101 angeordnet. Um eine einwandfreie Förderung des Düngers zu gewährleisten, ist im Inneren des Vorratsbehälters 103 für jede Auslauföffnung ein Förderer 108, der hier als Förderschnecke ausgebildet ist, vorgesehen.

Die linke Wurfscheibe 101 befindet sich in Arbeitsstellung unter dem Auslauf 107. Demgegenüber ist auf der rechten Seite der Hydromotor 105 mit der zugehörigen Wurfscheibe 101 aus dem Bereich der Auslauföffnung 107 mit Hilfe des Schwenkarms 104 weggeschwenkt. Am Tragarm ist im unteren Bereich eine Waage 109 mit Hilfe eines Trägers 110 angeordnet. Die Waage 109 trägt einen Auffangbehälter 111.

In dieser Ausgestaltung ist es möglich, Abdrehproben vollautomatisch durchzuführen, d.h. daß direkt mit der Waage 109 die während einer Abdrehprobe durch die zugehörige Auslauföffnung 107 ausgebrachte und im Auffangbehälter 111 aufgefangene Düngermenge gewogen werden kann. Dabei ist vorzugsweise ein Meßwertaufnehmer mit Endlagensteuerung, hier nicht dargestellt, der Waage 109 zugeordnet. Bei der Abdrehprobe wird die Förderschnecke eingeschaltet, das zugehörige Dosierorgan aufgesteuert und die Zeit automatisch aufgenommen.

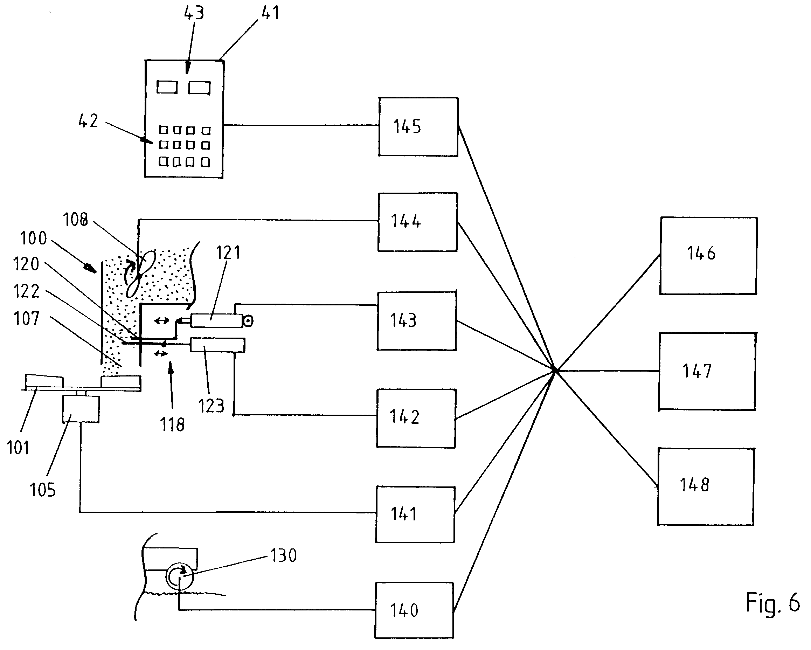

In Figur 6 ist ein Blockschaltbild zur besseren Verdeutlichung des Gesamtsystems dargestellt. Aus der Auslauföffnung 107 des Düngerstreuers 100 sind ein Absperrschieber 120, der von einem Hydraulikzylinder 121 betätigt wird, und ein Dosierorgan 118 vorgesehen. Das Dosierorgan 118 weist einen Dosierschieber 122 auf, der von einem Linearmotor 123 betätigt wird. Nach Verlassen der Auslauföffnung 107 fällt der Dünger auf die darunter angeordnete Wurfscheibe 101, die von dem Hydraulikmotor 105 angetrieben ist.

In dem in Figur 6 dargestellten Beispiel ist vorgesehen, daß während des Betriebes des Düngerstreuers 100 die aktuelle Fahrgeschwindigkeit gemessen wird. Dazu ist, vorzugsweise an einem nicht angetriebenen Schlepperrad, ein Sensor 130 vorgesehen. Über eine Meßwertaufnahme 140 des Sensors 130 kann die Anzahl der Umdrehungen bzw. die Anzahl der Umdrehungen pro Zeiteinheit des Schlepperrades erfaßt werden. Desweiteren ist eine Steuereinheit bzw. Meßwertaufnahme 141 für den Hydromotor 105 der Wurfscheibe 101, eine Steuereinheit 142 für den Linearmotor 123 des Dosierschiebers 122, eine Steuereinheit 143 für den Hydraulikzylinder 121 des Absperrschiebers 120 sowie eine Steuereinheit 144 für den im Düngerstreuer 100 angeordneten Förderer 108 vorgesehen. Weiterhin ist das Eingabetableau 41 mit der Eingabetastatur 42 und Anzeigeeinheiten 43 gemäß Figur 4 über eine Ein/Ausgabeeinheit 145 angeschlossen. Alle Einheiten 140 bis 145 stehen mit einem Prozessor 146, einem Speicher 147 und einer Zeitmeßeinrichtung 148 in Verbindung.

Vor Durchführung einer Abdrehprobe werden zuerst über die Eingabetastatur 42 Betriebsdaten eingegeben, die über die Ein/Ausgabeeinheit 145 in den Speicher 147 abgelegt werden. Der Prozessor 146 berechnet dann die beim Betrieb zu erwartenden Massenströme unter Verwendung der Daten des Speichers 147 und stellt den Dosierschieber 122 mit Hilfe des Linearmotors 123 über die Steuereinheit 142 für die erste Abdrehprobe ein. Dabei werden vom Prozessor 146 auch Kenndaten verwendet, die vorher werksseitig im Speicher 147 abgelegt wurden. Es wird dann der Auffangbehälter 111 (siehe Figur 5) unter der Auslauföffnung 107 plaziert. An der Eingabetastatur 42 wird die Abdrehprobe iniziiert. Der Prozessor 146 öffnet über die Steuerung 143 den Absperrschieber 120 mit Hilfe des zugeordneten Hydraulikzylinders 121, wobei gleichzeitig eine Aufnahme der Zeit durch die Zeitmeßeinrichtung 148 erfolgt. Zum Beenden der Abdrehprobe schließt der Prozessor 146 wieder den Absperrschieber 120 und die durch die Zeitmeßeinrichtung 148 ermittelte Auslaufzeit wird in den Speicher 147 abgelegt. Nach Wiegen der ausgelaufenen Düngermenge und Eingabe über die Eingabetastatur 42, wobei auch dieser Wert wiederum in den Speicher 147 abgelegt wird, kann eine Auswertung der Abdrehprobe durch den Prozessor 146 erfolgen. Die Auswertung bzw. die Bestimmung einer Einstellung des Dosierschiebers 122 erfolgt gemäß den schon beschriebenen Verfahren. Abschließend werden die gewonnenen Betriebssteuerdaten in den Speicher 147 abgelegt.

Im normalen Betrieb wird durch die Meßwertaufnahme 140, den Prozessor 146 und der Steuereinheit 142 des Dosierorgans 118 unter Berücksichtigung der im Speicher 147 abgelegten Betriebssteuerdaten eine fahrgeschwindigkeitsabhängige Steuerung realisiert. Hierbei wird in bekannter Weise aus der Drehzahl des Schlepperrades und einem im Speicher 147 abgelegten Proportionalitätsfaktor die aktuelle Fahrgeschwindigkeit des Schleppers bestimmt. Mit Hilfe der Betriebssteuerdaten aus dem Speicher 147, die durch die Abdrehproben gewonnen wurden, wird der Dosierschieber 122 über den Linearmotor 123 und die Steuereinheit 142 entsprechend eingestellt. Dabei erfolgt eine Überwachung der für ein gleichmäßiges Ausbringen des Streugutes notwendigen Drehzahl der Streuscheibe 101 über die Steuereinheit und die Meßwertaufnahme 141 durch den Prozessor 146. Mittels des Förderers 108 wird der notwendige Dünger zur Auslauföffnung 107 gefördert. Über die Eingabetastatur 42 und Anzeigeeinheiten 43 ist es möglich, aktuelle Daten während des Betriebes über die Ein- und Ausgabeeinheit 145 aus dem Speicher 147 und/oder den Meßwertaufnahmen 140, 141 abzurufen und auch den Betriebsablauf wunschgemäß zu beeinflussen, wobei der Prozessor 146 den gesamten Ablauf, Abfragen und Änderungen überwacht und koordiniert.

## Patentansprüche

1. Verfahren zur Eichung der Streudichte (Streumenge pro Flächeneinheit) eines fahrbaren Düngerstreuers in Abhängigkeit von der Düngersorte mit einem einstellbaren Dosierorgan insbesondere mit nicht-linearer Abhängigkeit zwischen dessen Stellgröße und der Dosiermenge,

wobei Kenndaten oder Kurven (21,22,23), die zumindest einen mittleren sowie zwei extreme oder düngerspezifische funktionelle Zusammenhänge zwischen dem Massenstrom und der Stellgröße des Dosierorgans (118) repräsentieren, in einem Rechner gespeichert werden,

wobei vor einer Abdrehprobe ein Wert v für eine bevorzugte Fahrgeschwindigkeit oder Grenzwerte $v_{min}$ und $v_{max}$ für einen bevorzugten Fahrgeschwindigkeitsbereich und/oder ein Wert D für eine bevorzugte Streudichte oder Grenzwerte $D_{min}$ und $D_{max}$ für einen bevorzugten Streudichtenbereich und/oder ein Wert A für eine bevorzugte Arbeitsbreite oder Grenzwerte $A_{min}$ und $A_{max}$ für einen bevorzugten Arbeitsbreitenbereich als Betriebsdaten eingegeben und gespeichert werden, wobei für zumindest einen der Parameter ein Bereich mittels der Grenzwerte festgelegt wird,

wobei aus den Werten und Grenzwerten ein minimaler und ein maximaler Massenstrom $\dot{m}_{min}$ bzw. $\dot{m}_{max}$ mit Hilfe der Formel $\dot{m} = D \times v \times A$ sowie deren algebraisches Mittel bestimmt werden,

wobei für das Dosierorgan (118) für eine erste Aodrehprobe aus dem minimalen oder dem maximalen Massenstrom und den Kenndaten oder der Kurve (22), die den mittleren funktionellen Zusammenhang zwischen dem Massenstrom und der Stellgröße des Dosierorgans (118) für eine durchschnittliche Düngersorte repräsentiert, eine erste Einstellung A ermittelt und das Dosierorgan (118) entsprechend eingestellt wird,

wobei in der ersten Abdrehprobe eine gewisse Menge Dünger bei der ermittelten Einstellung A des Dosierorgans ausgebracht und aufgefangen wird und der tatsächliche Massenstrom $\dot{m}$ aus der Ausbringzeit t und dem Wiegewert m des ausgebrachten Düngers nach $\dot{m} = m/t$ bestimmt wird,

wobei für das Dosierorgan (118) für eine zweite Aodrehprobe eine zweite Einstellung $B_i$ ermittelt wird, wobei gilt:

- wenn die erste Einstellung A mit dem minimalen Massenstrom ermittelt wurde, ergibt sich die zweite Einstellung $B_i$ aus dem maximalen Massenstrom und der dem tatsächlichen Massenstrom der ersten Abdrehprobe am nächsten liegenden Kurve, falls der tatsächliche Massenstrom kleiner als der mittlere Massenstrom ist, anderenfalls aus dem minimalen Massenstrom und der am nächsten liegenden Kurve, und

- wenn die erste Einstellung A mit dem maximalen Massenstrom ermittelt wurde, ergibt sich die zweite Einstellung $B_i$ aus dem minimalen Massenstrom und der dem tatsächlichen Massenstrom der ersten Abdrehprobe am nächsten liegenden Kurve, falls der tatsächliche Massenstrom größer als der mittlere Massenstrom ist, anderenfalls aus dem maximalen Massenstrom und der am nächsten liegenden Kurve,

wobei das Dosierorgan (118) für die zweite Abdrehprobe auf die zweite Einstellung $B_i$ eingestellt wird, die zweite Abdrehprobe durchgeführt wird und der tatsächliche Massenstrom für die zweite Abdrehprobe ermittelt wird und wobei mittels der beiden Werte für den tatsächlichen Massenstrom beider Abdrehproben und/oder deren Abweichung vom jeweils eingestellten Wert die Kenndaten bzw. Kurven angepaßt oder korrigiert werden und die angepaßten Kenndaten oder Kurven oder Korrekturfaktoren als Betriebssteuerdaten für das Dosierorgan (118) für den Betrieb des Düngerstreuers abgespeichert werden.

2. Verfahren zur Eichung der Streudichte (Streumenge pro Flächeneinheit) eines fahrbaren Düngerstreuers in Abhängigkeit von der Düngersorte mit einem einstellbaren Dosierorgan insbesondere mit nichtlinearer Abhängigkeit zwischen dessen Stellgröße und der Dosiermenge, wobei Kenndaten oder Kurven (31), die zumindest einen mittleren düngerspezifischen funktionellen Zusammenhang zwischen dem Massenstrom und der Stellgröße des Dosierorgans (118) repräsentieren, in einem Rechner gespeichert werden, wobei vor einer Abdrehprobe ein Wert v für eine bevorzugte Fahrgeschwindigkeit oder Grenzwerte $v_{min}$ und $v_{max}$ für einen bevorzugten Fahrgeschwindigkeitsbereich und/oder ein Wert D für eine bevorzugte Streudichte oder Grenzwerte $D_{min}$ und $D_{max}$ für einen bevorzugten Streudichtenbereich und/oder ein Wert A für eine bevorzugte Arbeitsbreite oder Grenzwerte $A_{min}$ und $A_{max}$ für einen bevorzugten Arbeitsbreitenbereich als Betriebsdaten eingegeben und gespeichert werden, wobei für zumindest einen der Parameter ein Bereich mittels der Grenzwerte festgelegt wird, wobei aus den Werten und Grenzwerten ein minimaler und ein maximaler Massenstrom $\dot{m}_{min}$ bzw. $\dot{m}_{max}$ mit Hilfe der Formel $\dot{m} = D \times v \times A$ sowie deren algebraisches Mittel bestimmt werden, wobei für das Dosierorgan (118) für eine erste Abdrehprobe aus dem mittleren Massenstrom und den Kenndaten bder der Kurve (31), die den mittleren funktionellen Zusammenhang zwischen dem Massenstrom und der Stellgröße des Dosierorgans (118) für eine durchschnittliche Düngersorte repräsentiert, eine erste Einstellung A ermittelt und das Dosierorgan (118) entsprechend eingestellt wird, wobei in der ersten Abdrehprobe eine gewisse Menge Dünger bei der ermittelten Einstellung A des Dosierorgans ausgebracht und aufgefangen wird und der tatsächliche Massenstrom m aus der Ausbringzeit t und dem Wiegewert $\dot{m}$ des ausgebrachten Düngers nach $\dot{m} = m/t$ bestimmt wird,

wobei die Kurve (31) in Abhängigkeit von der Abweichung des tatsächlichen Massenstroms korrigiert wird, wobei für das Dosierorgan (118) für eine zweite Abdrehprobe eine zweite Einstellung B ermittelt wird, wobei sich die zweite Einstellung B aus dem minimalen Massenstrom und der korrigierten Kurve (31'), falls der tatsächliche Massenstrom der ersten Abdrehprobe größer als der mittlere Massenstrom ist, anderenfalls aus dem maximalen Massenstrom und der korrigierten Kurve (31') ergibt, wobei das Dosierorgan (118) für die zweite Abdrehprobe auf die zweite Einstellung B eingestellt wird, die zweite Abdrehprobe durchgeführt wird und der tatsächliche Massenstrom für die zweite Abdrehprobe ermittelt wird und wobei mittels der beiden Werte für den tatsächlichen Massenstrom beider Abdrehproben und/oder deren Abweichung vom jeweils eingestellten Wert die Kenndaten bzw. Kurven angepaßt oder korrigiert werden und die angepaßten Kenndaten oder Kurven oder Korrekturfaktoren als Betriebssteuerdaten für das Dosierorgan (118) für den Betrieb des Düngerstreuers abgespeichert werden.

3. Verfahren nach Anspruch 1 bder 2, dadurch gekennzeichnet, daß die Kenndaten bder Kurven mehrerer Düngersorten gespeichert werden und das Dosierorgan (118) nach Selektion geeigneter Kenndaten bder Kurven für die erste Abdrehprobe eingestellt wird.

4. Verfahren nach einem der Ansprüche 1 bis 3, dadurch gekennzeichnet, daß als Betriebssteuerdaten eine Kurve dritten Grades mit der Nebenbedingung, daß die Kurve durch den Nullpunkt mit der Steigung Null geht, festgelegt wird.

5. Verfahren nach einem der Ansprüche 1 bis 4, dadurch gekennzeichnet, daß als Kenndaten eine flache, mittlere und steile Kurve (21,22,23) gespeichert werden, die eine mittlere und zwei extreme Funktionen für die Abhängigkeit des Massenstromes von der Stellung des Dosierorgans (118) repräsentieren.

6. Verfahren nach einem der Ansprüche 1 bis 5, dadurch gekennzeichnet, daß bei der ersten und zweiten Abdrehprobe eine vorgegebene Menge aufgefangen und die hierfür benötigte Ausbringzeit gespeichert wird.

**Claims**

1. Method for calibrating the spreading density (quantity spread per surface unit) of a movable fertilizer spreader as a function of the fertilizer type with an adjustable proportioning member, particularly with nonlinear dependence between its control variable and the proportioning quantity,
in which characteristics or curves (21, 22, 23), which at least represent an average and two extreme or fertilizer-specific, functional relationships between the mass flow and the control variable of the proportioning member (118) are stored in a computer,
in which prior to a calibrating check, a value v for a preferred speed of for a preferred travel speed range and/or a travel or limits $v_{min}$ and $v_{max}$ value D for a preferred spreading density or limits $D_{min}$ and $D_{max}$ for a preferred spreading density range and/or a value A for a preferred working width or limits $A_{min}$ and $A_{max}$ for a preferred working width range are inputted and stored as operating data and for at least one of the parameters a range is fixed by means of the limits,
in which from the values and limits a minimum and a maximum mass flow $\dot{m}_{min}$ and $\dot{m}_{max}$ are determined with the aid of the formula $\dot{m} = D \times v \times A$ as well as the algebraic mean thereof,
in which for the proportioning member (118) for a first calibrating check from the minimum or maximum mass flow and the characteristics or the curve (22), which represents the average functional relationship between the mass flow and the control variable of the proportioning member (118) for an average fertilizer type, a first setting A is determined and the proportioning member (118) is set in accordance therewith,
in which in the first calibrating check a certain fertilizer quantity is applied and collected at the determined proportioning member setting A and the actual mass flow $\dot{m}$ is determined form the application time t and the weighed value m of the applied fertilizer in accordance with $\dot{m} = m/t$,
in which for the proportioning member (118) for a second calibrating check a second setting $B_i$ is determined, in which:

- if the first setting A was determined with the minimum mass flow, the second setting $B_i$ is obtained from the maximum mass flow and the curve closest to the actual mass flow of the first calibrating check, if the actual mass flow is smaller than the average mass flow and otherwise from the minimum mass flow and the closest curve and

- if the first setting A was determined with the maximum mass flow, the second setting $B_i$ is obtained from the minimum mass flow and the actual mass flow of the first calibrating check at the closest curve, if the actual mass flow is higher than the average mass flow, otherwise from the maximum mass flow and the closest curve,

in which the proportioning member (118) is set to the second setting $B_i$ for the second calibrating check, the latter is performed and the actual mass flow for the second calibrating check is determined and
in which by means of the two values for the actual mass flow of both calibrating checks and/or their divergence from the in each case set value, the characteristics or curves are adapted or corrected and the adapted characteristics or curves or correction factors are stored as operating control data for the proportioning member (118) for fertilizer spreader operation.

2. Method for calibrating the spreading density (quantity spread per surface unit) of a movable fertilizer spreader as a function of the fertilizer type with an adjustable dosing member, particularly with nonlinear dependence between its control variable and the proportioning quantity,
in which characteristics or curves (31), which at least represent an average fertilizer-specific, functional relationship between the mass flow and the control variable of the proportioning member (118) are stored in a computer,
in which prior to a calibrating check a value v for a preferred speed of for a preferred travel speed range and/or a travel or limits $v_{min}$ and $v_{max}$ value D for a preferred spreading density or limits $D_{min}$ and $D_{max}$ for a preferred spreading density range and/or a value A for a preferred working width or limits $A_{min}$ and $A_{max}$ for a preferred working width range are inputted and stored as operating data and for at least one of the parameters a range is fixed by means of the limits,
in which from the values and limits are determined a minimum and a maximum $\dot{m}_{min}$ and $\dot{m}_{max}$ with the aid of the formula $\dot{m} = D \times v \times A$ as well as the algebraic main thereof,
in which for the proportioning member (118) for a first calibrating check from the average mass flow and the characteristics or curve (31) representing the average functional relationship between the mass flow and the control variable of the proportioning member (118) for an average fertilizer type, a first setting A is determined and the proportioning member (118) is set accordingly,
in which in the first calibrating check a certain quantity of fertilizer is applied and collected at the determined proportioning member setting A and the actual mass flow m is determined from the application time t and the weighing value $\dot{m}$ of the applied fertilizer in accordance with $\dot{m} = m/t$,
in which the curve (31) is corrected as a function of the divergence of the actual mass flow,
in which for the proportioning member (118) for a second calibrating check a second setting B is determined, the second setting B resulting from the minimum mass flow and the corrected curve (31'), if the actual mass flow of the first calibrating check is higher than the average mass flow and otherwise from the maximum mass flow and the correct curve (31'),

in which the proportioning member (118) for the second calibrating check is set to the second setting B, the second calibrating check is performed and the actual mass flow the second calibrating check is determined and

in which by means of the two values for the actual mass flow of both calibrating checks and/or their divergence from the in each case set value, the characteristics or curves are adapted or corrected and the adapted characteristics or curves or the correction factors are stored as operating control data for the proportioning member (118) for fertilizer spreader operation.

3. Method according to claim 1 or 2, characterized in that the characteristics or curves of several fertilizer types are stored and setting of the proportioning member (118) takes place after the selection of suitable characteristics or curves for the first calibrating check.

4. Method according to one of the claims 1 to 3, characterized in that as operating control data a cubic curve is fixed with the secondary condition that the curve passes through the zero point with zero pitch.

5. Method according to one of the claims 1 to 4, characterized in that as characteristics are stored a shallow, average and steep curve (21, 22, 23), which represent an average and two extreme functions for the dependence of the mass flow on the position of the proportioning member (118).

6. Method according to one of the claims 1 to 5, characterized in that in the case of the first and second calibrating checks a predetermined quantity is collected and the application time required for this is stored.

**Revendications**

1. Méthode d'étalonnage de la densité d'épandage (quantité d'engrais épandue par unité de surface) en fonction du type d'engrais d'un distributeur d'engrais transportable comprenant un organe de dosage réglable, notamment selon une fonction non linéaire entre sa valeur de réglage et le débit dosé, dans laquelle :

. on met en mémoire dans un calculateur des valeurs caractéristiques ou des courbes (21, 22, 23), qui représentent au moins une relation fonctionnelle moyenne ainsi que deux relations fonctionnelles extrêmes ou bien des relations fonctionnelles spécifiques à un type engrais entre le débit massique et la valeur de réglage de l'organe de dosage (118),

. avant un essai d'étalonnage, on introduit et on met en mémoire comme valeurs de fonctionnement une valeur v pour une vitesse de marche préférée ou des valeurs limites $v_{min}$ et $v_{max}$ pour une plage préférée de vitesses de marche et/ou une valeur D pour une densité d'épandage préférée ou des valeurs limites $D_{min}$ et $D_{max}$ pour une plage préférée de densités d'épandage et/ou une valeur A pour une largeur d'épandage préférée ou des valeurs limites $A_{min}$ et $A_{max}$ pour une plage préférée de largeurs d'épandage, en déterminant une plage au moyen des valeurs limites pour l'un au moins des paramètres,

. on détermine à partir des valeurs et des valeurs limites un débit massique minimal et un débit massique maximal, respectivement $\dot{m}_{min}$ et $\dot{m}_{max}$, au moyen de la formule $\dot{m} = D \times v \times A$, ainsi que leur moyenne algébrique,

. on obtient pour l'organe de dosage (118), à partir du débit massique minimal ou maximal et des valeurs caractéristiques ou de la courbe (22) qui représentent la relation fonctionnelle moyenne entre le débit massique et la valeur de réglage de l'organe de dosage (118), une première position de réglage A pour un premier essai d'étalonnage, et on règle l'organe de dosage (118) de manière correspondante,

. on laisse s'écouler et on récupère au cours du premier essai d'étalonnage une quantité donnée d'engrais, correspondant à la position de réglage A obtenue pour l'organe de dosage (118), et on détermine le débit massique effectif $\dot{m}$ à partir de la durée t de l'essai et de la valeur m de pesée de l'engrais qui s'est écoulé, selon la fonction $\dot{m} = m/t$,

. on obtient pour l'organe de dosage (118) une deuxième position de réglage $B_i$ pour un deuxième essai d'étalonnage de la manière suivante :

- si la première position de réglage A a été obtenue avec le débit massique minimal, on obtient la deuxième position de réglage $B_i$ à partir du débit massique maximal et de la courbe la plus proche du débit massique effectif du premier essai d'étalonnage, dans le cas où le débit massique effectif est inférieur au débit massique moyen, et sinon, à partir du débit massique minimal et de la courbe la plus proche, et

- si la première position de réglage A a été obtenue avec le débit massique maximal, on obtient la deuxième position de réglage

$B_i$ à partir du débit massique minimal et de la courbe la plus proche du débit massique effectif, dans le cas où le débit massique effectif est supérieur au débit massique moyen, et sinon, à partir du débit massique moyen et de la courbe la plus proche,

. on règle l'organe de dosage (118) sur la deuxième position de réglage $B_i$ pour le deuxième essai d'étalonnage, on réalise le deuxième essai d'étalonnage et on obtient le débit massique effectif pour le deuxième essai d'étalonnage,

. enfin, on adapte ou on corrige les valeurs caractéristiques et les courbes au moyen des deux valeurs du débit massique effectif des deux essais d'étalonnage et/ou de leur divergence par rapport à la valeur réglée correspondante, et on met en mémoire les valeurs caractéristiques, les courbes ou les facteurs de correction adaptés comme valeurs de commande du fonctionnement de l'organe de dosage (118) pour le fonctionnement du distributeur d'engrais.

2.  Méthode d'étalonnage de la densité d'épandage (quantité d'engrais épandue par unité de surface) en fonction du type d'engrais d'un distributeur d'engrais transportable comprenant un organe de dosage réglable, notamment selon une fonction non linéaire entre sa valeur de réglage et le débit dosé, dans laquelle :

    . on met en mémoire dans un calculateur des valeurs caractéristiques ou des courbes (31), qui représentent au moins une relation fonctionnelle moyenne spécifique à un type d'engrais entre le débit massique et la valeur de réglage de l'organe de dosage (118),

    . avant un essai d'étalonnage, on introduit et on met en mémoire comme valeurs de fonctionnement une valeur v pour une vitesse de marche préférée ou des valeurs limites $v_{min}$ et $v_{max}$ pour une plage préférée de vitesses de marche et/ou une valeur D pour une densité d'épandage préférée ou des valeurs limites $D_{min}$ et $D_{max}$ pour une plage préférée de densités d'épandage et/ou une valeur A pour une largeur d'épandage préférée ou des valeurs limites $A_{min}$ et $A_{max}$ pour une plage préférée de largeurs d'épandage, en déterminant une plage au moyen des valeurs limites pour l'un au moins des paramètres,

    . on détermine à partir des valeurs et valeurs limites un débit massique minimal et un débit massique maximal, respectivement $\dot{m}_{min}$ et $\dot{m}_{max}$, au moyen de la formule $\dot{m} = D \times v \times A$, ainsi que leur moyenne algébrique,

. on obtient pour l'organe de dosage (118), à partir du débit massique moyen et des valeurs caractéristiques ou de la courbe (31), qui représentent la relation fonctionnelle moyenne entre le débit massique et la valeur de réglage de l'organe de dosage (118) pour un type d'engrais moyen, une première position de réglage A pour un premier essai d'étalonnage, et on règle l'organe de dosage (118) de manière correspondante,

. on laisse s'écouler et on récupère au cours du premier essai d'étalonnage une quantité donnée d'engrais, correspondant à la position de réglage A obtenue pour l'organe de dosage, et on détermine le débit massique effectif $\dot{m}$ à partir de la durée t de l'essai et de la valeur m de pesée de l'engrais qui s'est écoulé, selon la fonction $\dot{m} = m/t$,

. on corrige la courbe (31) en fonction de la divergence du débit massique effectif,

. on obtient pour l'organe de dosage (118) une deuxième position de réglage B pour un deuxième essai d'étalonnage, cette deuxième position de réglage B s'obtenant à partir du débit massique minimal et de la courbe corrigée (31'), dans le cas où le débit massique effectif du premier essai d'étalonnage est supérieur au débit massique moyen, et sinon, à partir du débit massique minimal et de la courbe corrigée (31'),

. on règle l'organe de dosage (118) sur la deuxième position de réglage B pour le deuxième essai d'étalonnage, on réalise le deuxième essai d'étalonnage et on obtient le débit massique effectif pour le deuxième essai d'étalonnage,

. enfin, on adapte ou on corrige les valeurs caractéristiques ou les courbes au moyen des deux valeurs du débit massique effectif des deux essais d'étalonnage et/ou de leur divergence par rapport à la valeur réglée correspondante, et on met en mémoire les valeurs caractéristiques, les courbes ou les facteurs de correction adaptés comme valeurs de commande du fonctionnement de l'organe de dosage (118) pour le fonctionnement du distributeur d'engrais.

3.  Méthode selon l'une des revendications 1 ou 2, caractérisée en ce que l'on met en mémoire les valeurs caractéristiques ou les courbes de plusieurs types d'engrais, et que l'on règle l'organe de dosage (118) pour le premier essai d'étalonnage après avoir sélectionné des valeurs caractéristiques ou des courbes adaptées.

4.  Méthode selon l'une des revendications 1 à 3, caractérisée en ce que l'on sélectionne comme valeurs de commande du fonctionnement une courbe de degré trois, avec la condition supplémentaire que la courbe passe au point zéro avec une pente nulle.

5.  Méthode selon l'une des revendications 1 à 4, caractérisée en ce que l'on met en mémoire comme valeurs caractéristiques une courbe aplatie, une moyenne et une pentue (21, 22, 23), qui représentent une fonction moyenne et deux fonctions extrêmes pour la relation entre le débit massique et la position de réglage de l'organe de dosage (118).

6.  Méthode selon l'une des revendications 1 à 5, caractérisée en ce qu'au cours du premier et du deuxième essai d'étalonnage, on récupère une quantité prédéterminée, et on met en mémoire la durée d'écoulement nécessaire pour une telle quantité.

1. Eingabe : - Ausbringmenge (mehrere Angaben)
              - Arbeitsbreite (optional)
              - Fahrgeschwindigkeit (opt. min./max)
              - weitere Eingaben (optional)

2. Berechnung der Massenströme

3. Bestimmung der 1. Einstellung A (1. Abdrehprobe)

   Speicher für verschiedene Eich- und Kenndaten

4. Durchführung der 1.Abdrehprobe

5. Eingabe der Ergebnisse 1

6. Auswertung (1.Abdrehpr.) + Bestimmung der 2.Einstellung $B_i$ (2.Abdrehpr.)

7. Durchführung der 2.Abdrehprobe

8. Eingabe der Ergebnisse 2

9. Auswertung der 2.Abdrehprobe

10. Bestimmung der Betriebssteuerdaten für Massenstromeinstellung

11. Betrieb

Fig.1

Fig.2

Fig. 3

Fig.4

Fig.5

18

Fig. 6